# FASCICULE DE BREVET EUROPEEN

(11) **EP 3 267 047 B1**
(45) Date de publication et mention de la délivrance du brevet: **13.09.2023**
(21) Numéro de dépôt: 17179808.5
(22) Date de dépôt: 05.07.2017
(51) Int. Cl.: B61D 17/04, F16B 11/00, F16B 5/00, F16B 5/06

(54) **DISPOSITIF D'ASSEMBLAGE DE DEUX PROFILÉS**
VORRICHTUNG ZUM ZUSAMMENBAU VON ZWEI PROFILEN
DEVICE FOR ASSEMBLING TWO PROFILES

(30) Priorité: 06.07.2016 FR 1656473
(43) Date de publication de la demande: 10.01.2018
(73) Titulaire: ALSTOM Transport Technologies, 93400 Saint-Ouen (FR)
(72) Inventeur: HALLONET, Frédéric, 17220 La Jarne (FR)
(74) Mandataire: Lavoix

(56) Documents cités:
- EP-A1- 2 886 426
- WO-A2-2012/084090
- DE-A1-102004 007 307

## Description

L'invention concerne un dispositif d'assemblage de deux profilés, permettant notamment d'assembler deux profilés de matériaux différents à température ambiante.

Les dispositifs d'assemblage connus nécessitent des tolérances de fabrication très faibles des éléments de l'assemblage, ce qui n'est pas compatible avec l'assemblage de longs panneaux, tels que peuvent en comprendre certaines parties de véhicules ferroviaires, qui peuvent ne pas être rigoureusement rectilignes dans les zones d'assemblage.

Les solutions existantes, telles que par exemple WO-A-94/15035 et EP-A-0 845 604, sont généralement conçues pour supporter les efforts transversaux à la liaison, la résistance aux tractions exercées dans le plan de la liaison étant généralement moins performante.

DE-A-10 2004 007307 et EP-A-2 886 426 décrivent des dispositifs d'assemblage comprenant des éléments mâle et femelle ayant des parties larges et des parties resserrées et formant des cavités remplies de matériau de garnissage.

C'est à ces inconvénients qu'entend remédier l'invention en proposant un nouveau dispositif d'assemblage de deux profilés, permettant un assemblage à froid assurant une meilleure résistance aux efforts exercés dans le plan de la liaison et permettant de plus larges tolérances de fabrication.

A cet effet, l'invention concerne un dispositif d'assemblage conforme à la revendication 1.

Grâce à l'invention, la solidité de l'assemblage est garantie grâce à la forme des parties resserrées des éléments femelles, qui empêchent le matériau de remplissage de sortir des volumes dans lesquels il est injecté. En outre, la géométrie des éléments femelles et des éléments mâles permet une interface importante entre le matériau de remplissage et les éléments de l'assemblage, ce qui réduit les contraintes de cisaillement dans le matériau de remplissage, notamment lors de contraintes dans une direction parallèle à celle de la liaison entre les deux profilés. L'invention permet donc de façon générale un assemblage à température ambiante fiable et résistant dans plusieurs directions, et qui conserve ses propriétés mécaniques avec des pièces à tolérance de fabrication large.

Selon des aspects avantageux mais non obligatoires de l'invention, un tel dispositif peut incorporer une ou plusieurs des caractéristiques suivantes, prises dans toute combinaison techniquement admissible :
- La partie resserrée des éléments femelles est en contact avec l'extrémité proximale des éléments mâles.
- Les éléments mâles présentent des ergots inclinés ouverts en direction de leur extrémité proximale.
- La surface des éléments femelles présente des ergots.
- Les éléments femelles ont une section transversale en forme de goutte d'eau.
- Le matériau de remplissage est une résine ou une colle.

L'invention concerne également une caisse de véhicule ferroviaire comprenant une paroi latérale et une paroi transversale comprenant chacune un profilé respectif, les profilés étant positionnés en regard l'un de l'autre et assemblés l'un à l'autre par un dispositif d'assemblage. Cette caisse de véhicule est caractérisée en ce que le dispositif d'assemblage est tel mentionné ci-dessus.

L'invention sera mieux comprise et d'autres avantages de celle-ci apparaîtront plus clairement à la lumière de la description qui va suivre, d'un dispositif d'assemblage de deux profilés conformes à son principe, faite à titre d'exemple non limitatif et en référence aux dessins annexés dans lesquels :
- la figure 1 est une vue en perspective et en coupe de deux profilés assemblés au moyen d'un dispositif d'assemblage pas conforme à l'invention ;
- la figure 2 est une vue en perspective, selon un autre angle et pour des profilés raccourcis, du dispositif d'assemblage de la figure 1 ;
- les figures 3 à 4 sont des coupes selon un plan transversal de dispositifs d'assemblage conformes à deux autres modes de réalisation qui ne font pas l'objet de la présente invention ;
- les figures 5 à 6 sont des coupes selon un plan transversal de dispositifs d'assemblage conformes à deux autres modes de réalisation respectivement pas conforme (figure 5) et conforme (figure 6) à l'invention ;
- la figure 7 est une vue en perspective coupée transversalement et longitudinalement d'un dispositif d'assemblage conforme à un autre mode de réalisation pas conforme à l'invention.

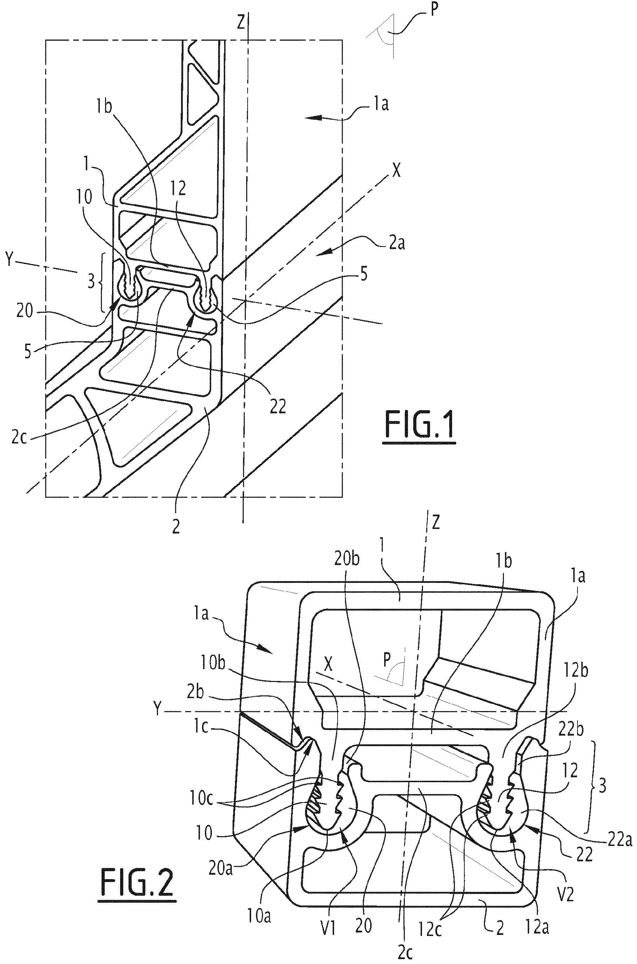

La figure 1 représente un premier profilé 1 et un second profilé 2 positionnés en regard l'un de l'autre et assemblés l'un à l'autre grâce à un dispositif d'assemblage 3. Le dispositif d'assemblage 3 désigne les éléments répartis sur les profilés 1 et 2 permettant la connexion mécanique entre les profilés 1 et 2, ainsi que les éléments supplémentaires garantissant cette connexion mécanique.

Les profilés 1 et 2 sont assemblés l'un à l'autre le long d'une direction longitudinale X. Les profilés 1 et 2 sont de grande longueur. Ces profilés 1 et 2 peuvent par exemple, former deux parties d'une coque externe d'un véhicule ferroviaire. Par exemple, les profilés 1 et 2 peuvent être compris respectivement dans une paroi latérale et une paroi transversale d'une caisse de véhicule ferroviaire. Les profilés 1 et 2, forment un plan général P parallèle à la direction longitudinale X et à des faces latérales respectives 1a et 2a des profilés 1 et 2.

On désigne par Y une direction transversale perpendiculaire au plan général P. Dans la suite, les adjectifs « longitudinal » et « transversal » sont employés en référence aux directions X et Y. On définit également une direction Z perpendiculaire aux directions X et Y et contenue dans le plan général P, la direction Z formant l'axe de connexion entre les profilés 1 et 2, ou en d'autres termes, la direction selon laquelle les profilés 1 et 2 sont rapprochés en vue de leur assemblage. Le dispositif d'assemblage 3 est représenté plus précisément à la figure 2, sur laquelle les profilés 1 et 2 sont de taille et de longueur réduites selon la direction longitudinale X et selon la direction Z.

Le profilé 1, qui se situe sur le haut de la figure 2, comprend deux éléments d'assemblage mâles 10 et 12, s'étendant parallèlement au plan général P et le long de la direction longitudinale X. En regard de ces éléments d'assemblage mâles 10 et 12, le profilé 2, qui se situe sur le bas de la figure 2, comprend deux éléments femelles d'assemblage 20 et 22 disposés en regard des éléments mâles 10 et 12 et adaptés pour recevoir les éléments mâles 10 et 12 selon la direction Z.

Conformément à l'invention, les éléments femelles 20 et 22 ont une section transversale comprenant une partie large 20a et 22a, qui reçoit une extrémité distale 10a, 12a des éléments mâles 10 et 12. Par convention, on désigne l'extrémité distale des éléments mâles 10 et 12 comme étant l'extrémité libre, c'est-à-dire celle qui s'éloigne le plus de la partie principale du profilé 1, formée par une paroi d'extrémité 1b, et l'extrémité proximale comme étant l'extrémité non libre, c'est-à-dire la partie de l'élément mâle 10 ou 12 se trouvant le plus près de la partie principale du profilé 1, c'est-à-dire au bord de sa paroi d'extrémité 1b.

Les éléments femelles comprennent une partie resserrée 20b et 22b entourant l'extrémité proximale 10b et 12b des éléments mâles 10 et 12. Ainsi, les géométries respectives des éléments mâles et femelles définissent des volumes internes V1 et V2 s'étendant entre les éléments mâles 10 et 12 et la partie large 20a et 22a des éléments femelles 20 et 22. Les parties resserrées 20b et 22b ferment les volumes intérieurs V1 et V2 au niveau des extrémités proximales 10b et 12b.

Le dispositif d'assemblage 3 comprend également, en complément des éléments mâle et femelle 10, 12 et 20, 22, un garnissage 5 de matériau de remplissage injecté dans les volumes V1 et V2, qui solidifie l'assemblage entre les profilés 1 et 2 en empêchant la sortie des éléments mâles 10 et 12 des éléments femelles 20 et 22. En outre, les parties resserrées 20b et 22b empêchent le matériau de remplissage de sortir des volumes V1 et V2 et renforcent l'assemblage en empêchant la désolidarisation selon la direction Z. Le matériau de remplissage est de préférence une résine ou une colle.

Selon un aspect optionnel, les parties resserrées 20b et 22b sont en contact avec l'extrémité proximale 10b et 12b, ce qui garantit d'autant plus contre le risque que le garnissage 5 sorte des volumes intérieurs V1 et V2.

Toutefois, en variante, un jeu existe entre les extrémités proximales 10b et 12b et les parties resserrées 20b, 22b pour permettre l'échappement d'un excédent de garnissage 5, c'est-à-dire, de résine et/ou de polymère de calage/collage, inséré lors de l'assemblage des profilés 1 et 2 en dehors des volumes intérieurs V1 et V2.

Le garnissage 5 est injecté dans les volumes V1 et V2 après assemblage des profilés 1 et 2. Alternativement, et pas conformément à l'invention, le garnissage peut-être prédisposé avant assemblage, par exemple par coulage dans les éléments femelles 20 et 22.

Dans l'exemple représenté, les éléments femelles 20 et 22 ont une section transversale en forme de goutte d'eau. En variante, la section transversale des éléments femelles 20 et 22 peut avoir toute autre forme présentant une partie large et une partie resserrée.

Les éléments mâles 10 et 12 présentent de préférence des ergots 10c et 12c inclinés ouverts en direction des extrémités proximales 10b et 12b. Les ergots 10c et 12c s'opposent donc à un mouvement d'arrachement selon la flèche F1 qui serait imposé au profilé 1 par rapport au profilé 2 dans la direction Z. Les ergots 10c et 12c permettent d'augmenter la retenue du garnissage 5 autour des éléments mâles 10 et 12 et son ancrage dans les volumes V1 et V2.

Selon l'invention, le dispositif d'assemblage 3 comprend des éléments de renfort mâle et femelle de formes complémentaires prévus sur des bords externes 1a et 2a des profilés 1 et 2. Ces éléments de renfort comprennent des rainures 1c ménagées longitudinalement dans le profilé 1, adaptées pour recevoir des nervures 2b ménagées sur le profilé 2. Les rainures 1c et les nervures 2b s'assemblent selon la direction Z et peuvent par exemple présenter une forme transversale en V. Ces renforts assurent la tenue des éléments mâles 10 et 12 dans les éléments femelle 20 et 22 en empêchant l'ouverture des éléments femelles 20 et 22 sous l'effet de la traction du profilé 1 par rapport au profilé 2. La présence des éléments 2b et 1c, combinée à la présence de la paroi horizontale d'extrémité 1b, empêche le bord des parties resserrées 20b et 22b situées du côté des faces latérales 2a de s'écarter vers l'extérieur. En effet, les nervures 2b sont bloquées transversalement par les rainures 1c, dont l'écartement selon la direction transversale Y est maintenu par la paroi 1b. La résistance à l'ouverture des éléments femelle 20 et 22 est également améliorée par la présence sur le profilé 2 d'une paroi d'extrémité 2c, s'étendant parallèlement aux directions X et Y et à la paroi d'extrémité 1b, et qui maintient l'écartement selon la direction Y des parties resserrées 20b et 22b. La paroi d'extrémité 2c empêche les bords des parties resserrées 20b et 22b de s'écarter vers l'intérieur sous l'action d'une traction du profilé 1 par rapport au profilé 2. En d'autres termes, la présence des éléments 2b et 1c et des parois d'extrémité 1b, 2c permet qu'une ouverture de passage des éléments mâles 10 et 12, définie par chaque élément femelle 20 et 22, conserve ses dimensions et ne soit pas agrandie, même sous l'effet d'efforts de traction appliqués entre les profilés 1 et 2.

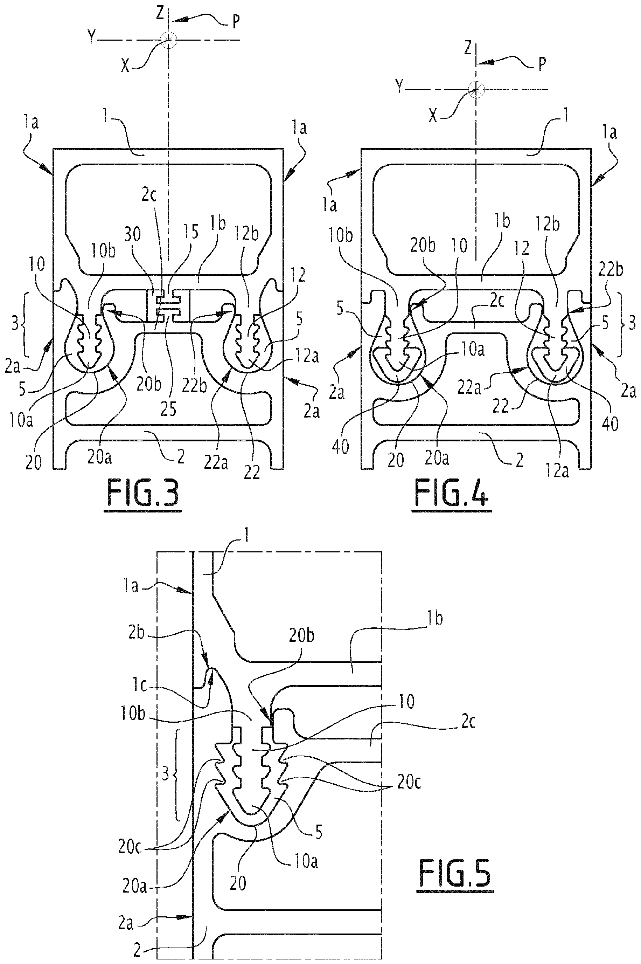

D'autres modes de réalisation de l'invention sont représentés sur les figures 3 à 7. Dans ces modes de réalisation, les éléments communs au premier mode de réalisation portent les mêmes références et fonctionnent de la même manière. Seules les différences par rapport au premier mode de réalisation sont détaillées ci-après.

Comme cela est représenté sur les figures 3 et 4, le dispositif d'assemblage 3 comprend des moyens additionnels de liaison entre le profilé 1 et le profilé 2. Dans le mode de réalisation de la figure 3, ces moyens additionnels, qui ne font pas l'objet de la présente invention, impliquent des nervures à extrémité élargie 15 et 25 prévues en regard sur chacun des profilés 1 et 2. Dans l'exemple représenté, le profilé 1 comprend une nervure 15 s'étendant à partir de la paroi 1b et le profilé 2 comprend une nervure 25 s'étendant en regard de la nervure 15 à partir de la paroi d'extrémité 2c. Les nervures à extrémité élargie 15 et 25 ont une forme transversale en T, le trait horizontal du T formant l'extrémité élargie. Les moyens additionnels de liaison comprennent en outre une pièce mécanique de connexion 30, qui entoure les extrémités élargies des nervures 15 et 25 de manière à les solidariser l'une à l'autre. Les nervures 15 et 25 et la pièce 30 permettent de verrouiller de façon optimale l'assemblage entre le profilé 1 et le profilé 2.

Dans le mode de réalisation de la figure 4, qui peut être mis en oeuvre en remplacement du mode de réalisation de la figure 3 ou bien de façon supplémentaire à celui-ci, les moyens additionnels de liaison, qui ne font pas l'objet de la présente invention, comprennent des éléments 40 entourant les extrémités distales 10a et 12a des éléments mâles 10 et 12, et dont la dimension transversale est supérieure à la dimension transversale de la partie resserrée 20b et 22b des éléments femelles 20 et 22. Les éléments 40 ont une forme homothétique à celle des extrémités distales 10a et 12a et les bords des éléments 40 peuvent donc sortir des éléments femelles 20 et 22, ce qui augmente la solidité de l'assemblage.

Dans le mode de réalisation de la figure 5, la surface interne des éléments femelles 20 et 22 présente des ergots 20c, qui sont formés dans la partie large 20a. Ces ergots 20c sont inclinés et ouverts en direction du profilé 1 de telle manière qu'ils s'opposent au déplacement du matériau de remplissage en dehors des éléments femelles 20 et 22. Les ergots 20c ont une forme sensiblement similaire à celle des ergots 10c et 12c et la même orientation. Cela permet d'obtenir que le garnissage 5 soit retenu dans les éléments femelles 20 et 22 ce qui augmente la retenue des éléments mâles 10 et 12 dans les éléments femelles 20 et 22.

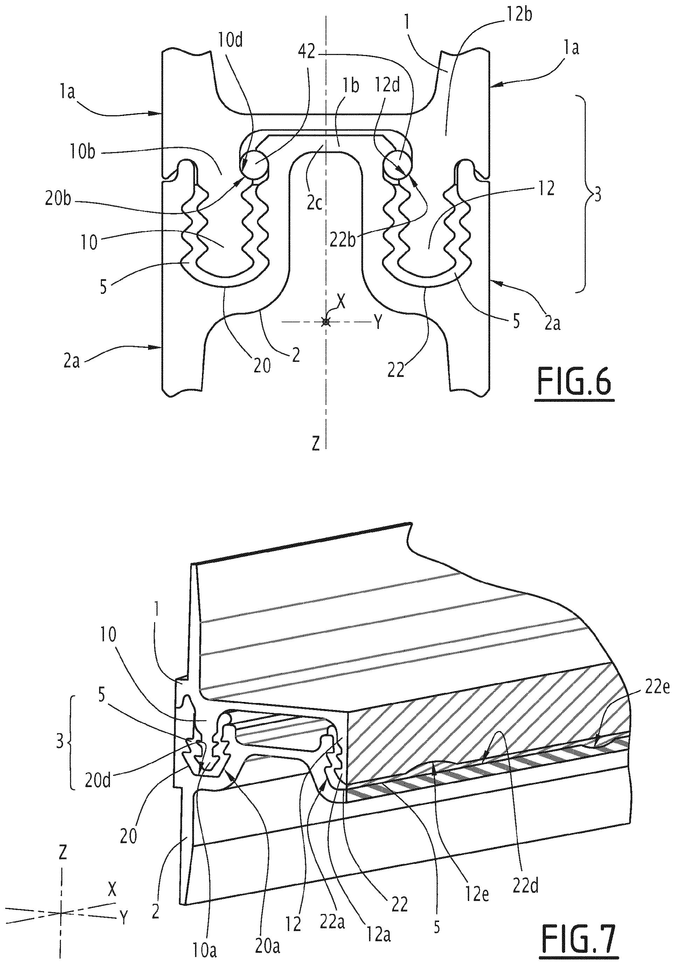

Dans le mode de réalisation de la figure 6, les éléments d'assemblage mâles 10, 12 sont reliés au profilé 2 au niveau des éléments femelles d'assemblage correspondants 20, 22 par une goupille 42.

Plus précisément, la partie resserrée 20b, 22b de chaque élément femelle d'assemblage 20, 22 comprend, par exemple, une goupille 42 reliée mécaniquement à l'extrémité proximale 10b, 12b de l'élément mâle d'assemblage 10,12 correspondant.

Avantageusement encore, chaque goupille 42 est reliée à un bord interne 10d, 12d de l'extrémité proximale 10b, 12b. On entend par bord interne, un bord situé à l'opposé des faces latérales 1a, 2a suivant la direction Y, c'est à dire du côté de l'axe longitudinal X des profilés 1, 2 suivant la direction Y.

Chaque goupille 42 forme une liaison mécanique, autrement dit physique entre les deux profilés 1, 2.

Chaque goupille 42 permet notamment d'éviter une désolidarisation complète des deux profilés 1, 2 en cas de feu et est avantageusement en un matériau résistant au feu, de préférence incombustible et ininflammable.

Avantageusement encore, dans le mode de réalisation de la figure 7, sur laquelle un élément mâle 12 est coupé en son centre selon un plan parallèle au plan P, la hauteur d'au moins un des éléments mâles 10, 12, mesurée suivant la direction Z, varie le long de la direction longitudinale X. En d'autres termes, l'extrémité distale 10a, 12a d'au moins un des éléments mâles 10, 12 comprend le long de la direction longitudinale X des premières portions en creux suivant la direction Z, dont l'une est visible portant la référence 12e. Ces premières portions en creux forment l'un des volumes internes V1, V2 et reçoivent le garnissage 5 de matériau de remplissage.

Avantageusement encore, la hauteur d'au moins un des éléments femelles 20, 22 au niveau d'une zone située en regard de l'extrémité distale 10a, 12a de l'élément mâle 10, 12 correspondant, mesurée suivant la direction Z, varie le long de la direction longitudinale X. En d'autres termes, la partie large 20a, 22a d'au moins un des éléments femelles 20, 22 comprend un fond 20d, 22d suivant la direction Z, dont la hauteur mesurée suivant la direction Z varie le long de la direction longitudinale X. Ledit fond 20d, 22d comprend ainsi le long de la direction longitudinale X des deuxièmes portions en creux suivant la direction Z, dont une est visible avec la référence 22e, qui forment l'un des volumes internes V1, V2 et reçoivent le garnissage 5 de matériau de remplissage.

Les premières et deuxièmes portions en creux telles que définies ci-dessus permettent d'assurer un verrouillage optimisé de l'assemblage des profilés 1 et 2 suivant la direction longitudinale X.

Les caractéristiques techniques des modes de réalisation et variantes décrits ci-dessus peuvent être combinées pour former de nouveaux modes de réalisation de l'invention, dans le cadre des revendications.

## Revendications

1. Dispositif d'assemblage (3) de deux profilés (1, 2), comprenant deux éléments d'assemblage mâles (10, 12) formés sur un premier profilé (1) et deux éléments femelles (20, 22) d'assemblage formés sur le second profilé (2) et adaptés pour recevoir les éléments d'assemblage mâles (10, 12), les éléments femelles (20, 22) ayant une section transversale comprenant une partie large (20a, 22a) recevant l'extrémité distale (10a, 12a) des éléments mâles (10, 12) et une partie resserrée (20b, 22b) entourant une extrémité proximale (10b, 12b) des éléments mâles (10, 12), le dispositif d'assemblage (3) comprenant un garnissage (5) de matériau de remplissage injecté dans des volumes (V1, V2) délimités entre les éléments mâles (10, 12) et la partie large (20a, 22a) des éléments femelles (10, 12), et des moyens additionnels (42) de liaison entre le premier profilé (1) et le second profilé (2), **caractérisé en ce qu'**il comprend en outre des éléments de renfort (1c, 2b) mâles et femelles de formes complémentaires prévus sur des bords externes du premier et du second profilés (1, 2), et des parois (1b, 2c) prévues sur les premier et second profilés (1, 2), maintenant l'écartement, selon une direction transversale (Y), des éléments de renfort (1c, 2b) et des parties resserrées (20b, 22b) des éléments femelles (20, 22), et **en ce que** les moyens additionnels comportent une goupille (42) reliant les éléments d'assemblage mâles (10, 12) du premier profilé (1) au second profilé (2) au niveau des éléments femelles d'assemblage (20, 22) du second profilé (2).

2. Dispositif d'assemblage selon la revendication 1, **caractérisé en ce que** la partie resserrée (20b, 22b) des éléments femelles (20, 22) est en contact avec l'extrémité proximale (10b, 12b) des éléments mâles (10, 12).

3. Dispositif d'assemblage selon l'une des revendications précédentes, **caractérisé en ce que** les éléments mâles (10, 12) présentent des ergots (10c, 12c) inclinés ouverts en direction de leur extrémité proximale (10b, 12b).

4. Dispositif d'assemblage selon l'une des revendications précédentes, **caractérisée en ce que** la surface des éléments femelles (20, 22) présente des ergots (20c).

5. Dispositif d'assemblage selon l'une des revendications précédentes, **caractérisé en ce que** les éléments femelles (20, 22) ont une section transversale en forme de goutte d'eau.

6. Dispositif d'assemblage selon l'une des revendications précédentes, **caractérisé en ce que** le matériau de remplissage est une résine ou une colle.

7. Caisse de véhicule ferroviaire comprenant une paroi latérale et une paroi transversale comprenant chacune un profilé respectif (1, 2), les profilés étant positionnés en regard l'un de l'autre et assemblés l'un à l'autre par un dispositif d'assemblage (3), **caractérisée en ce que** le dispositif d'assemblage (3) est selon l'une quelconque des revendications précédentes.

## Patentansprüche

1. Vorrichtung (3) zum Zusammenbau von zwei Profilen (1, 2), umfassend zwei Steck-Zusammenbauelemente (10, 12), die an einem ersten Profil (1) ausgebildet sind, und zwei Buchsen-Zusammenbauelemente (20, 22), die an einem zweiten Profil (2) ausgebildet sind und zur Aufnahme der Steck-Zusammenbauelemente (10, 12) geeignet sind, wobei die Buchsenelemente (20, 22) einen Querschnitt haben, der einen breiten Teil (20a, 22a) umfasst, der das distale Ende (10a, 12a) der Steckelemente (10, 12) aufnimmt, und einen verengten Teil (20b, 22b), der ein proximales Ende (10b, 12b) der Steckelemente (10, 12) umgibt, wobei die Zusammenbauvorrichtung (3) eine Verkleidung (5) aus in Volumen (V1, V2), die zwischen den Steckelementen (10, 12) und dem breiten Teil (20a, 22a) der Buchsenelemente (10, 12) begrenzt sind, eingespritztem Füllmaterial umfasst, und zusätzliche Verbindungsmittel (42) zwischen dem ersten Profil (1) und dem zweiten Profil (2), **dadurch gekennzeichnet, dass** sie ferner komplementär geformte Steck- und Buchsen-Verstärkungselemente (1c, 2b) umfasst, die auf äußeren Rändern des ersten und zweiten Profils (1, 2) vorgesehen sind, und Wände (1b, 2c), die auf dem ersten und zweiten Profil (1, 2) vorgesehen sind, die gemäß einer Querrichtung (Y) den Abstand der Verstärkungselemente (1c, 2b) und der verengten Teile (20b, 22b) der Buchsenelemente (20, 22) aufrechterhält, und dass die zusätzlichen Mittel einen Stift (42) aufweisen, der die Steck-Zusammenbauelemente (10, 12) des ersten Profils (1) mit dem zweiten Profil (2) im Bereich der Buchsen-Zusammenbauelemente (20, 22) des zweiten Profils (2) verbindet.

2. Zusammenbauvorrichtung nach Anspruch 1, **dadurch gekennzeichnet, dass** der verengte Teil (20b, 22b) der Buchsenelemente (20, 22) mit dem proximalen Ende (10b, 12b) der Steckelemente (10, 12) im Kontakt ist.

3. Zusammenbauvorrichtung nach einem der vorhergehenden Ansprüche, **dadurch gekennzeichnet, dass** die Steckelemente (10, 12) geneigte, in Richtung ihres proximalen Endes (10b, 12b) offene Nasen (10c, 12c) aufweisen.

4. Zusammenbauvorrichtung nach einem der vorhergehenden Ansprüche, **dadurch gekennzeichnet, dass** die Oberfläche der Buchsenelemente (20, 22) Nasen (20c) aufweist.

5. Zusammenbauvorrichtung nach einem der vorhergehenden Ansprüche, **dadurch gekennzeichnet, dass** die Buchsenelemente (20, 22) einen tropfenförmigen Querschnitt haben.

6. Zusammenbauvorrichtung nach einem der vorhergehenden Ansprüche, **dadurch gekennzeichnet, dass** das Füllmaterial ein Harz oder ein Klebstoff ist.

7. Wagenkasten eines Schienenfahrzeugs mit einer Seitenwand und einer Querwand, die jeweils ein jeweiliges Profil (1, 2) umfassen, wobei die Profile einander zugewandt positioniert und durch eine Zusammenbauvorrichtung (3) miteinander verbunden sind, **dadurch gekennzeichnet, dass** die Zusammenbauvorrichtung (3) nach einem der vorhergehenden Ansprüche ist.

## Claims

1. A device (3) for assembling two profiles (1, 2), comprising two male assembly elements (10, 12) formed on a first profile (1) and two female assembly elements (20, 22) formed on the second profile (2) and suitable for receiving the male assembly elements (10, 12), the female elements (20, 22) having a cross-section comprising a wide part (20a, 22a) receiving the distal end (10a, 12a) of the male elements (10, 12) and a narrower part (20b, 22b) surrounding a proximal end (10b, 12b) of the male elements (10, 12), the device (3) for assembling comprising a filling (5) of filler material injected into volumes (V1, V2) defined between the male elements (10, 12) and the wide part (20a, 22a) of the female elements (10, 12), and additional connecting means (42) between the first profile (1) and the second profile (2), **characterized in that** it further comprises male and female reinforcing elements (1c, 2b) with complementary shapes provided on outer edges of the first and second profiles (1, 2), and walls (1b, 2c) provided on the first and second profiles (1, 2), maintaining the separation, along a transverse direction (Y), of the reinforcing elements (1c, 2b) and the narrower parts (20b, 22b) of the female elements (20, 22), and **in that** the additional means (42) comprise a pin (42) connecting the male connecting elements (10, 12) of the first profile (1) to the second profile (2) at the corresponding female connecting elements (20, 22).

2. The device (3) for assembling according to claim 1, **characterized in that** the narrower part (20b, 22b) of the female elements (20, 22) is in contact with the proximal end (1 0b, 12b) of the male elements (10, 12).

3. The device (3) for assembling according to one of the preceding claims, **characterized in that** the male elements (10, 12) have inclined lugs (10c, 12c) open toward their proximal end (10b, 12b).

4. The device (3) for assembling according to one of the preceding claims, **characterized in that** the surface of the female elements (20, 22) has lugs (20c).

5. The device (3) for assembling according to one of the preceding claims, **characterized in that** the female elements (20, 22) have a teardrop-shaped cross-section.

6. The device (3) for assembling according to one of the preceding claims, **characterized in that** the filler material is a resin or a glue.

7. A railway vehicle body comprising a side wall and a transverse wall each comprising a respective profile (1, 2), the profiles being positioned facing one another and assembled to one another by a device (3) for assembling, **characterized in that** the assembly device (3) is according to any one of the preceding claims.
